# FASCICULE DE BREVET EUROPEEN

(11) **EP 1 805 357 B1**
(45) Date de publication et mention de la délivrance du brevet: **18.04.2012**
(21) Numéro de dépôt: 05814980.8
(22) Date de dépôt: 26.10.2005
(51) Int. Cl.: D01F 11/12, D06M 15/00, D06M 23/16

(54) **FIBRES COMPOSITES ET FIBRES DISSYMETRIQUES A PARTIR DE NANOTUBES DE CARBONE ET DE PARTICULES COLLOIDALES**
AUS KARBONNANORÖHRCHEN UND KOLLOIDPARTIKELN GEWONNENE VERBUNDFASERN UND ASYMMETRISCHE FASERN
COMPOSITE FIBRES AND ASYMMETRICAL FIBRES OBTAINED FROM CARBON NANOTUBES AND COLLOIDAL PARTICLES

(30) Priorité: 29.10.2004 FR 0411605
(43) Date de publication de la demande: 11.07.2007
(73) Titulaire: CENTRE NATIONAL DE LA RECHERCHE SCIENTIFIQUE (CNRS), 75794 Paris Cedex 16 (FR)
(72) Inventeur: POULIN, Philippe, F-33600 Talence (FR); VAUGIEN, Thibaud, F-31240 L'Union (FR)
(74) Mandataire: Novagraaf Technologies
(86) Numéro de dépôt international: PCT/FR2005/002679
(87) Numéro de publication internationale: WO 2006/048531

(56) Documents cités:
- FR-A- 2 805 179
- FR-A- 2 846 572
- SEEGER T ET AL: "SiOx-coating of carbon nanotubes at room temperature" CHEMICAL PHYSICS LETTERS, NORTH-HOLLAND, AMSTERDAM, NL, vol. 339, no. 1-2, 4 mai 2001 (2001-05-04), pages 41-46, XP002207105 ISSN: 0009-2614
- PETIT L ET AL: "Sub-micrometer silica spheres dissymmetrically decorated with gold nanoclusters" MATERIALS LETTERS, NORTH HOLLAND PUBLISHING COMPANY. AMSTERDAM, NL, vol. 51, no. 6, décembre 2001 (2001-12), pages 478-484, XP004320531 ISSN: 0167-577X

## Description

La présente invention concerne un procédé de réalisation de fibres composites comprenant deux couches distinctes ayant une composition et des propriétés physico-chimiques différentes et d'épaisseurs contrôlées et homogènes, l'une desdites deux couches étant constituée de nanotubes de carbone, lesdites fibres composites étant obtenues à partir de fibres de nanotubes de carbone et d'une première solution de concentration déterminée en particules colloïdales destinées à constituer la seconde couche.

L'invention concerne également les fibres issues du procédé et leurs applications.

La norme UIPAC définit au sens général les particules colloïdales comme étant des particules dont la taille est comprise entre 1 nanomètre et quelques micromètres. La présente invention se référera à cette définition lorsque le terme « particules colloïdales » sera employé.

Les fibres naturelles ou synthétiques utilisées comme textiles ou charges composites sont souvent enduites d'additifs. Cette enduction a pour but de modifier les propriétés de surface de la fibre ou de lui amener une fonctionnalité particulière. Dans certains cas, on emploie le terme ensimage. Par exemple, l'ensimage dit « textile » appliqué sur les filaments en sortie de filière consiste à déposer un agent de liaison assurant la cohésion des filaments entre eux, diminuant l'abrasion et facilitant les manipulations ultérieures (tissage) et évitant la formation de charges électrostatiques. Il existe bien d'autres cas où une fibre doit être recouverte par un composé particulier. Par exemple, il est possible de colorer une fibre tout simplement en l'enduisant de colorants. Une fibre textile, isolante à l'origine, peut être rendue conductrice d'électricité par son enduction avec des polymères conducteurs. Il est possible de parfumer un vêtement en enduisant ses fibres de capsules contenant un parfum.

L'enduction classique d'une fibre conduit à une couverture uniforme et symétrique de sa surface.

Il est cependant préférable dans certains cas d'apporter un additif dans une fibre de façon différente, par exemple, en surface, mais de façon dissymétrique. Ces conditions différentes sont proposées pour améliorer les propriétés des fibres et de leur conférer de nouvelles fonctions.

Dans le cadre particulier de l'invention, la fibre utilisée comme matériau de base est une fibre de nanotubes de carbone.

Les nanotubes de carbone présentent une structure et des propriétés électroniques et mécaniques qui en font des matériaux très prometteurs pour une multitude d'applications : composites, actionneurs électromécaniques, câbles, fils résistants, détecteurs chimiques, stockage d'hydrogène, afficheurs à émission d'électrons, convertisseurs d'énergie, composants électroniques, électrodes, batteries, supports de catalyse, etc.

Les nanotubes de carbone peuvent être mis sous forme de rubans ou de fibres par un procédé de filage décrit dans FR2805179 et WO0163028. Ce procédé consiste à disperser de façon homogène les nanotubes dans un milieu liquide.

Une fois dispersés, les nanotubes sont re-condensés, sous forme d'un ruban ou d'une pré-fibre en injectant la dispersion dans un autre liquide qui provoque la coagulation des nanotubes.

Les rubans, pré-fibres ou fibres finales, peuvent être traités par des étirements en voie humide de façon à améliorer l'orientation des nanotubes. Ces reformages sont décrits, dans le brevet FR 0110611, comme des étirements de la fibre, en dynamique ou statique, dans des solvants ayant une plus ou moins bonne affinité pour le polymère coagulant, pour améliorer la structure et les propriétés physiques des fibres.

Les propriétés de ces fibres, comme celles de n'importe quelles fibres, dépendent de façon critique de la nature et de l'arrangement de leurs composants.

Les nanotubes de carbone constituent un matériau « intelligent » capable de répondre sur le plan mécanique et électrique à des stimuli de nature électrique, mécanique chimique ou biologique. La fibre de nanotubes peut constituer une structure particulièrement adaptée pour mettre en exergue ces fonctions. En effet, la fibre des nanotubes constitue un objet macroscopique contenant une haute fraction de nanotubes orientés. Ainsi, il est possible de réaliser des actionneurs dont les performances dépassent largement celles d'autres assemblages de nanotubes, comme le papier de nanotubes. Il est aussi possible de réaliser des micro-électrodes beaucoup plus sensibles que les micro-électrodes classiques à base de fibres de carbone traditionnelles.

Les capteurs ou actionneurs, à base de « matériaux intelligents » sont souvent utilisés dans des dispositifs permettant d'amplifier leur déformation. L'exemple le plus classique est le bilame de matériaux piézoélectriques. Ces bilames sont constitués d'une couche active piézoélectrique et d'une couche passive inerte. Lorsque la lame piézo-électrique s'allonge ou se contracte, le bilame se courbe fortement. Une très faible déformation, à l'échelle microscopique, peut ainsi être fortement amplifiée et visualisée macroscopiquement. De même, il existe des capteurs à base de très fines feuilles métalliques. En présence d'un composé chimique particulier s'adsorbant sur une des faces, la lame se courbe fortement. Cet effet traduit la modification des contraintes de surfaces différenties sur les deux faces de la fine feuille. Comme dans l'exemple du bilame piézo-électrique, on retrouve un effet mécanique fortement amplifié par la dissymétrie du système. Ce fort effet d'amplification en courbure provient d'une faible déformation en allongement ou contraction.

De tels bilames, fonctionnant comme capteurs ou actionneurs, pourraient être réalisés avec des films de nanotubes. Cependant, les propriétés électromécaniques et électrochimiques des fibres étant supérieures à celles de films, l'utilisation de ces fibres permettrait de gagner sur les propriétés intrinsèques de l'assemblage en bénéficiant de l'orientation et de la densité des nanotubes dans une fibre. De plus cela permettrait de réaliser des dispositifs de très petites tailles, potentiellement utiles comme micro-capteurs ou micro-actionneurs.

La réalisation de ces bilames correspond à une structure dissymétrique de la fibre de nanotubes.

Certaines approches ont été essayées de manière à recouvrir de manière dissymétrique une fibre de nanotubes de carbone.

La fibre peut être passée face à un dispositif qui « peint » un seul côté, à la surface d'un liquide sous forme de bain ou de goutte. Cette approche peut dans certains cas conduire à une enduction dissymétrique mais ne permet pas de contrôler facilement la quantité déposée. Les limitations de cette approche sont liées aux propriétés de mouillage et à la viscosité du liquide utilisé. Si le liquide (solution, polymère fondu) est peu visqueux, il se répartit rapidement autour de la fibre et l'enduction n'est pas dissymétrique. En utilisant un système plus visqueux, il est possible d'avoir une enduction dissymétrique mais son épaisseur n'est pas facilement contrôlable. Par exemple, pour un polymère qui reste fortement visqueux à l'état fondu à haute température et qui solidifie à basse température, une certaine quantité de polymère est entraînée et rapidement figée lors du refroidissement. La quantité emportée dépend de nombreux paramètres couplés et difficilement contrôlables : viscosité du polymère, refroidissement, vitesse de passage de la fibre, mouillabilité de la fibre par le polymère. Au final, la quantité enduite est peu contrôlée. On peut penser que le passage par une solution du polymère, plutôt que par un produit pur fondu, peut résoudre le problème. En effet, en dissolvant le polymère on a un système dont les propriétés de viscosité et de mouillage sont contrôlables et reproductibles. Elles ne dépendent que du solvant utilisé et non plus d'un processus de refroidissement. Lors de l'évaporation du solvant le polymère sèche sur la fibre. En utilisant des concentrations différentes de polymère, on peut espérer faire des couches d'épaisseur contrôlée. Mais le passage par une solution ne fonctionne pas de façon satisfaisante car la solution peu visqueuse a tendance à se répartir spontanément et uniformément autour de la fibre.

Les inventeurs ont donc mis au point, ce qui fait l'objet de l'invention, un procédé un procédé de réalisation de fibres composites comprenant deux couches distinctes ayant une composition et des propriétés physico-chimiques différentes et d'épaisseurs contrôlées et homogènes, l'une desdites deux couches étant constituée de nanotubes de carbone, lesdites fibres composites étant obtenues à partir de fibres de nanotubes de carbone et d'une première solution de concentration déterminée en particules colloïdales destinées à constituer la seconde couche qui permet de pallier l'ensemble de ces inconvénients.

A cet effet, le procédé de réalisation de fibres composites selon l'invention se caractérise en ce qu'il comprend les étapes suivantes :
- lesdites fibres sont mises, par leur surface latérale, au contact de la surface d'une seconde solution chimiquement apte à provoquer l'agrégation des particules colloïdales et immergées totalement ou partiellement dans ladite seconde solution, l'épaisseur immergée desdites fibres définissant la zone d'immersion,
- lesdites fibres ainsi précouvertes sont mises, par leur même surface latérale, au contact de la surface de ladite première solution de particules colloïdales et immergées dans celle-ci au plus jusqu'à ladite zone d'immersion de manière à former localement un gel colloïdal d'épaisseur fixe déterminée par la concentration de ladite première solution ,
- la séparation desdites fibres recouvertes de ladite première solution, et
- le séchage et/ou l'évaporation du solvant de ladite première solution.

De préférence, ladite concentration déterminée en particules colloïdales est comprise entre 0,5% et 50%en masse, bornes incluses.

Préférentiellement, ladite seconde solution est choisie parmi les solutions salines, les solutions enrichies en micelles ou en polymères non adsorbants pour induire des interactions attractives de déplétion et/ou les solutions dont les conditions de pH déstabilisent les particules colloïdales.

Plus préférentiellement encore, les solutions salines sont des solutions de chlorure d'aluminium.

Particulièrement, lesdites particules colloïdales sont choisies parmi les particules de polymères, les particules métalliques, les particules semi-conductrices, les gouttes d'émulsion et/ou les particules inorganiques.

Plus particulièrement, les particules de polymères sont du latex de polystyrène.

Plus particulièrement encore, les particules inorganiques sont choisies parmi la silice, l'oxyde de titane et/ou l'argile.

Selon un mode préféré de mise en oeuvre du procédé selon l'invention, l'immersion dans ladite seconde solution est totale.

Cette approche permettra en outre de réaliser des fibres composites coaxiales et concentriques

Selon un autre mode de mise en oeuvre du procédé selon l'invention, l'immersion dans ladite seconde solution est partielle.

Cette approche particulière permettra ainsi de réaliser des fibres dissymétriques du type bilame précédemment décrit.

L'invention concerne également les fibres concentriques obtenues par la première mise en oeuvre du procédé selon l'invention ainsi que les fibres dissymétriques obtenues par la seconde mise en oeuvre du procédé selon l'invention.

Les applications des deux types de fibres seront décrites ci après.

Parmi celles ci, on peut particulièrement mentionner :
- L'application des fibres concentriques à la réalisation d'électrodes et/ou de capteurs, et
- l'application des fibres dissymétriques à la réalisation d'actionneurs mécanques.

Dans le second mode de mise en oeuvre du procédé selon l'invention, la fibre de nanotubes est enduite d'un seul côté par une solution colloïdale. Si cette solution est peu visqueuse la couverture aura tendance à s'uniformiser. De plus, la quantité de colloïdes emportés dépend de la viscosité de la dispersion colloïdale, de la vitesse d'extraction et des tensions interfaciales (mouillage) mises en jeu. Ces facteurs peuvent varier fortement selon les produits utilisés. Les deux autres facteurs qui jouent un rôle prépondérant sur les épaisseurs de colloïdes ajoutés et qui peuvent être contrôlés de façon systématique sont ici mis en jeu. Il s'agit d'une part du caractère adhésif des colloïdes ainsi que de leur concentration. Si les conditions physico-chimiques sont telles qu'il n'y pas d'adhésion, il serait difficile d'ajouter une grande quantité de colloïdes car ceux-ci auront tendance à être évacués avec le solvant s'il y a un phénomène de drainage. En revanche, si les particules sont adhésives, elles resteront dans la structure et il sera possible d'en ajouter une forte proportion. Cette dernière sera beaucoup moins sensible aux paramètres mis en jeu (viscosité, mouillage, vitesses d'extraction). Les colloïdes rendus adhésifs par le contact avec ladite seconde solution restent dans la structure indépendamment des autres conditions. Ce comportement apporte un avantage considérable car il devient possible de contrôler la quantité de colloïdes ajoutés uniquement en variant leur concentration dans le bain. La concentration des colloïdes reste en effet le seul paramètre pertinent.

L'invention sera mieux comprise à la lecture de la description détaillée faite ci-après en référence aux dessins sur lesquels :
Les figures 1, 2 et 3 représentent le schéma de principe d'un mode de mise en oeuvre du procédé selon la présente invention.
Les figures 4, 5, 6 et 7 représentent des exemples de fibres dissymétriques obtenues par une des mises en oeuvres du procédé selon l'invention pour des concentrations en colloïdes différentes.
La figure 8 représente une application particulière d'une fibre réalisée par une mise en oeuvre du procédé selon l'invention.
Les figures 9, 10 et 11 illustrent une autre application particulière des fibres obtenues selon l'une des mises en oeuvres du procédé selon l'invention.
La figure 12 est un exemple de fibre coaxiale et concentrique obtenue selon une autre mise en oeuvre du procédé selon l'invention.

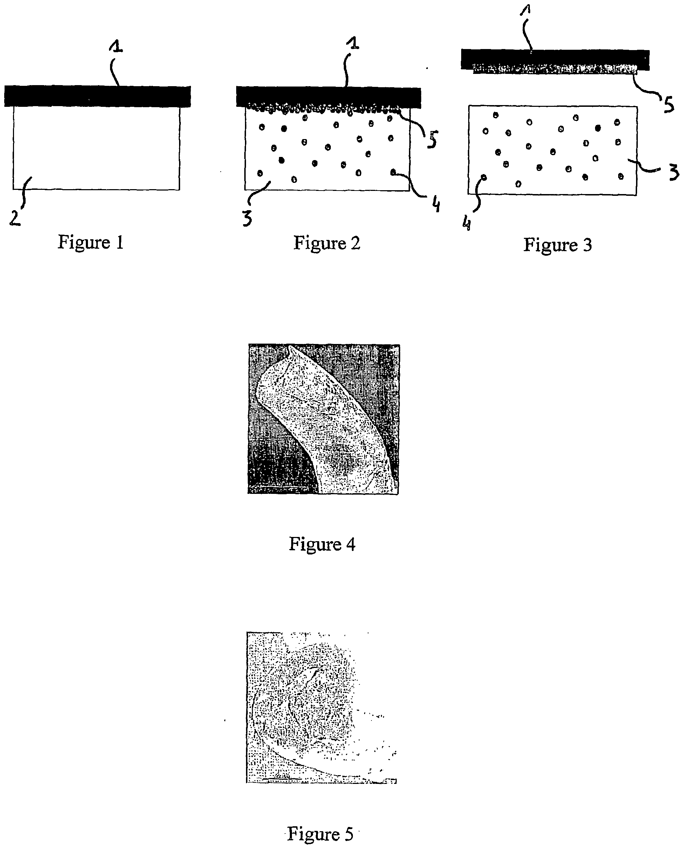

Sur la figure 1, une fibre de nanotubes de carbone 1 est mise, par sa surface latérale, au contact de la surface d'une solution 2 chimiquement apte à provoquer l'agrégation des particules colloïdales. Dans le cas représenté, la fibre 1 est partiellement immergée dans ladite solution 2. L'épaisseur immergée de ladite fibre 1 définit la zone d'immersion.

Sur la figure 2, la fibre 1 ainsi précouverte est mise, par la même surface latérale, au contact de la surface d'une solution 3 de particules colloïdales 4 et immergée dans celle-ci au plus jusqu'à ladite zone d'immersion. Les particules 4 s'agrégent et se déposent sur la fibre 1 de manière à former localement un gel colloïdal 5 d'épaisseur fixe déterminée par la concentration de ladite solution 3.

Sur la figure 3, la fibre 1 recouverte des particules 4 est séparée de la solution 3 et elle conserve une couverture uniforme et dissymétrique en particules colloïdales.

Une étape complémentaire, non représentée, de séchage et/ou d'évaporation du solvant de la solution 3 est alors pratiquée de manière à obtenir une fibre « sèche » et prête à être utilisée ou à subir d'éventuels post-traitements nécessaires à son utilisation.

Des exemples de mise en oeuvre du procédé selon l'invention sont donnés ci après.

### Exemple 1

Mise en oeuvre du procédé selon l'invention de manière à réaliser une fibre composite (ou hétérogène) dissymétrique.

Une fibre de nanotubes de carbone est ici recouverte avec des particules de latex afin de former une fibre de nanotubes couverte par une gaine de polymère.

Les fibres de nanotubes de carbone utilisées dans cet exemple sont obtenues selon le procédé de filage de nanotubes de carbone décrit dans le brevet FR 2 805 179.

### Caractéristiques du filage :

Pré-fibre obtenue par injection d'une solution de nanotubes dans l'écoulement d'une solution de polymères coagulants.

### Nanotubes : synthétisés par arc électrique.

Solution de nanotubes : suspensions contenant 0,5% en masse de nanotubes et 1,2% de dodecyl sulfate de sodium (dispersant). La suspension est homogénéisée par ultrasons.

Solution de polymère coagulant : solution aqueuse à 5% en masse de PVA (masse molaire 72 kg et taux d'hydrolyse 88%).

La pré-fibre est ensuite lavée trois fois dans des bains d'eau pure puis séchée. Elle présente une section cylindrique.

Cette fibre est ensuite en partie immergée dans une solution saline d'AlCl₃ (concentration 1M). Ce sel trivalent induit la floculation des particules colloïdales (latex) ici utilisées.

La fibre imprégnée de solution saline est ensuite trempée également dans une solution colloïdale de particules de latex (particules de polystyrène diamètre 60 nm, fraction volumique des latex en suspension variable pour effectuer des couvertures de différentes épaisseurs), jusqu'à la limite de la zone d'immersion.

Les particules s'agglomèrent sur la partie de la fibre imprégnée de solution saline.

La fibre est ensuite extraite de ce bain pour être séchée.

Différentes concentrations de solutions colloïdales ont été essayées, allant de 0,5% à 50%.

Dans tous les cas, l'épaisseur de la couche obtenue est fonction de la concentration en colloïdes. Les couches ainsi obtenues sont plus homogènes du fait de l'utilisation préalable de solution saline.

Les fibres hétérogènes à structure dissymétrique obtenues sont particulièrement intéressantes pour obtenir des systèmes bi-fonctionnels (la partie riche en nanotubes ayant des propriétés différentes de la partie riche en colloïdes) ou des géométries de bimorphes pour des applications mécaniques et - électromagnétiques.

Les figures 4, 5, 6 et 7 sont des photographies en microscopie électronique à balayage de fibres dissymétriques de nanotubes de carbone couvertes de polystyrène déposé par une mise en oeuvre de procédé selon la présente invention. Chaque fibre est couverte par une couche de polystyrène d'épaisseur variable. L'épaisseur de polystyrène est contrôlée par la concentration de particules de latex de polystyrène dans la solution avec laquelle la fibre de nanotubes a été mise en contact. La concentration massique en particules colloïdales varie de la façon suivante : 5%, 10%, 20% et 40%.

Les applications de ces fibres sont très diverses. Ci-dessous, des exemples concrets en sont donnés.

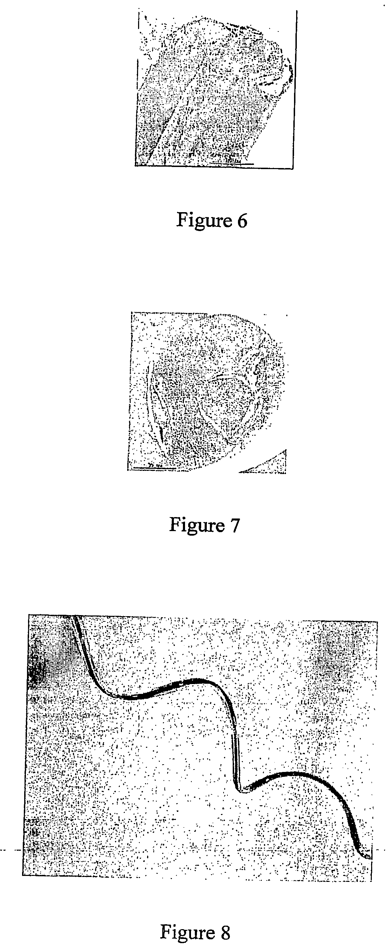

Une simple élévation de température induit une forte déformation de la fibre car la partie riche en colloïdes et la partie riche en nanotubes n'ont pas les mêmes coefficients de dilatation thermique. L'incorporation d'une telle fibre dans un solvant donné pourra aussi donner des effets mécaniques importants selon que ce solvant gonfle préférentiellement l'une ou l'autre des parties. Pour illustrer cet effet, une fibre dissymétrique contenant une fibre de nanotubes enrichie en PVA et couverte par une couche de polystyrène selon une mise en oeuvre du procédé selon l'invention est réalisée. La partie nanotube/PVA est fortement hydrophile et gonfle en présence d'eau ou d'humidité. Le polystyrène, qui lui est hydrophobe, ne réagit pas à la présence d'eau. Le contraste de comportement se traduit par une forte déformation de la fibre dissymétrique qui forme une hélice en réponse à l'allongement de la partie nanotube/PVA fixé comme un bilame sur la partie polystyrène qui elle ne s'allonge pas. Ces déformations sont réversibles et donnent lieu à des effets de mémoire de forme (voir figure 8).

Cette géométrie sera aussi particulièrement avantageuse pour faire des actionneurs électromécaniques ou des capteurs. La partie contenant les nanotubes peut, par exemple, être stimulée par un champ électrique dans un électrolyte pour s'allonger ou se contracter. Si elle est associée à une partie riche en colloïdes ayant une réponse différente au champ, ou pas de réponse du tout, la géométrie de bimorphe conduira à une forte déformation de la fibre.

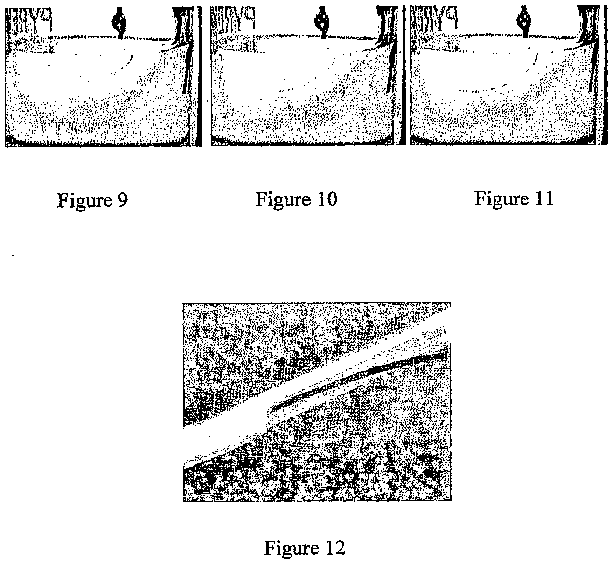

Cet effet est illustré sur les figures 9 à 11.

Ces figures sont des illustrations des propriétés électromécaniques d'une fibre de nanotubes de carbone dissymétrique (longueur 2 cm) dans une solution d'électrolyte (NaCl 1M) quand une tension alternative de 1V est appliquée entre la fibre et une contre-électrode en solution.

L'allongement de la partie nanotube dans ces conditions est de l'ordre de 0.2% (soit 40 microns environ). Ce faible allongement est très fortement amplifié en courbure grâce à la géométrie dissymétrique de la fibre. La déformation sur les photos correspond en effet à une courbure due à un mouvement de l'ordre du centimètre.

### Exemple 2

Mise en oeuvre du procédé selon l'invention de manière à réaliser une fibre composite coaxiale concentrique.

Le procédé selon l'invention permet également de faire des enductions symétriques. En trempant la fibre dans une solution saline (ou autre induisant la coagulation des colloïdes destinés à être déposés) et en immergeant ensuite complètement la fibre dans la solution colloïdale, il se forme un dépôt uniforme par agrégation des colloïdes sur la fibre.

Toutes les conditions sont similaires à celles de l'enduction dissymétrique décrite dans l'exemple précédent, à la différence près que les fibres sont immergées non plus en surface mais totalement dans les solutions salines et colloïdales.

Pour illustrer la faisabilité du procédé avec un système différent, on utilise des particules minérales, mais cela fonctionne tout aussi bien avec des particules de latex comme dans le cas des fibres dissymétriques.

La solution colloïdale est une dispersion aqueuse de particules de silice (30 nm de diamètre, 20% en masse).

Le résultat de la fibre obtenue est présentée à la figure 12 qui est une photographie d'une fibre de nanotubes de carbone recouverte de silice par agrégation et dépôt de particules colloïdales de silice en surface. La couverture de silice, blanche, a été ouverte volontairement pour faire apparaître la fibre de nanotubes à l'intérieur (coeur noir).

La fibre recouverte de silice est isolante, alors que la fibre de nanotubes au coeur est elle fortement conductrice d'électricité (résistivité 1 ohm.cm).

Les principales applications de telles fibres seraient des fils conducteurs avec une gaine isolante ainsi que des micro-électrodes en ne laissant dépasser qu'une extrémité de longueur contrôlée de fibre de nanotubes.

## Revendications

1. Procédé de réalisation de fibres composites comprenant deux couches distinctes ayant une composition et des propriétés physico-chimiques différentes et d'épaisseurs contrôlées et homogènes, l'une desdites deux couches étant constituée de nanotubes de carbone, lesdites fibres composites étant obtenues à partir de fibres de nanotubes de carbone (1) et d'une première solution (3) de concentration déterminée en particules colloïdales (4) destinées à constituer la seconde couche **caractérisé en ce qu** il comprend les étapes suivante
- lesdites fibres (1) sont mises, par leur surface latérale, au contact de la surface d'une seconde solution (2) chimiquement apte à provoquer l'agrégation des particules colloïdales (4) et immergées totalement ou partiellement dans ladite seconde solution (2), l'épaisseur immergée desdites fibres définissant la zone d'immersion,
- lesdites fibres (1) ainsi précouvertes sont mises, par leur même surface latérale, au contact de la surface de ladite première solution (3) de particules colloïdales (4) et immergées dans celle-ci au plus jusqu'à ladite zone d'immersion de manière à former localement un gel colloïdal (5) d'épaisseur fixe déterminée par la concentration de ladite première solution (3),
- la séparation desdites fibres (1) recouvertes de ladite première solution (3), et
- le séchage et/ou l'évaporation du solvant de ladite première solution (3).

2. Procédé selon la revendication 1, **caractérisé en ce que** ladite concentration déterminée en particules colloïdales (4) est comprise entre 0,5% et 50% en masse, bornes incluses.

3. Procédé selon l'une des revendications 1 ou 2, **caractérisé en ce que** ladite seconde solution (2) est choisie parmi les solutions salines, les solutions enrichies en micelles ou en polymères non adsorbants pour induire des interactions attractives de déplétion et/ou les solutions dont les conditions de pH déstabilisent les particules colloïdales.

4. Procédé selon la revendication 3, **caractérisé en ce que** les solutions salines sont des solutions de chlorure d'aluminium,

5. Procédé selon l'une quelconque des revendications 1 à 4, **caractérisé en ce que** lesdites particules colloïdales (4) sont choisies parmi les particules de polymères, les particules métalliques, les particules semi-conductrices, les gouttes d'émulsion et/ou les particules inorganiques.

6. Procédé selon la revendication 5, **caractérisé en ce que** les particules de polymères sont du latex de polystyrène.

7. Procédé selon la revendication 5, **caractérisé en ce que** les particules inorganiques sont choisies parmi la silice, l'oxyde de titane et/ou l'argile.

8. Procédé selon l'une quelconque des revendications 1 à 7, **caractérisé en ce que** l'immersion dans ladite seconde solution (2) est totale.

9. Procédé selon l'une quelconque des revendications 1 à 7, **caractérisé en ce que** l'immersion dans ladite seconde solution (2) est partielle

10. Fibres concentriques obtenues par le procédé selon la revendication 8.

11. Fibres dissymétriques obtenues par le procédé selon les revendications 9.

12. Application des fibres selon la revendication 10 à la réalisation d'électrodes et/ou de capteurs.

13. Application des fibres selon la revendication 11 à la réalisation d'actionneurs mécaniques.

## Claims

1. Method of manufacturing composite fibres comprising two distinct layers having different compositions and physico-chemical properties as well as controlled, homogenous thicknesses, one of said two layers comprising carbon nanotubes, said composite fibres being obtained from carbon nanotube fibres (1) and a first solution (3) of a given concentration of colloidal particles (4) intended to constitute the second layer, **characterised in that** the method comprises the following steps:
- said fibres (1) are placed in contact, by their lateral surface, with the surface of a second solution (2) which is chemically capable of causing the aggregation of the colloidal particles (4), and are completely or partially immersed in said second solution (2), the immersed thickness of said fibres defining the immersion area,
- said fibres (1) thus pre-coated are placed in contact, by the same lateral surface, with the surface of the first solution (3) of colloidal particles (4), and are immersed in it at most up to said immersion area so as to locally form a colloidal gel (5) with a fixed thickness determined by the concentration of said first solution (3),
- the separation of said fibres (1) coated with said first solution (3), and
- drying and/or evaporating the solvent from said first solution (3).

2. Method according to claim 1, **characterised in that** said given concentration of colloidal particles (4) is comprised between 0.5% and 50% by mass, inclusive.

3. Method according to one of claims 1 or 2, **characterized in that** said second solution (2) is chosen from saline solutions, solutions enriched with micelles or non-absorbent polymers to induce attractive depletion interactions and/or solutions in which pH conditions destabilise the colloidal particles.

4. Method according to claim 3, **characterised in that** the saline solutions are aluminium chloride solutions,

5. Method according to any one of claims 1 to 4, **characterised in that** said colloidal particles (4) are chosen from among polymer particles, metallic particles, semi-conducting particles, emulsion drops and/or inorganic particles.

6. Method according to claim 5, **characterised in that** the polymer particles are polystyrene latex.

7. Method according to claim 5, **characterised in that** the inorganic particles are chosen from silica, titanium oxide and/or clay.

8. Method according to any one of claims 1 to 7, **characterised in that** the immersion in said second solution (2) is complete.

9. Method according to any one of claims 1 to 7, **characterised in that** the immersion in said second solution (2) is partial.

10. Concentric fibres obtained from the method according to claim 8.

11. Asymmetric fibres obtained from the method according to claim 9.

12. Use of fibres according to claim 10 for the production of electrodes and/or sensors.

13. Use of fibres according to claim 11 for the production of mechanical actuators.

## Patentansprüche

1. Verfahren zur Fertigung von Verbundfasern umfassend zwei getrennte Schichten mit unterschiedlicher Zusammensetzung und physikalischchemischen Eigenschaften, und mit kontrollierter homogener Dicke, wobei eine der besagten Schichten aus Karbonnanoröhrchen besteht, wobei besagte Verbundfasern aus Karbonnanoröhrchenfasern (1) gewonnen werden und eine erste Lösung (3) mit einer gegebenen Konzentration an Kolloidpartikeln (4) zur Bildung der zweiten Schicht, **dadurch gekennzeichnet dass** das Verfahren folgende Schritte umfasst :
- besagte Fasern (1) werden an ihrer seitlichen Oberfläche mit der Oberfläche einer zweiten Lösung (2) in Kontakt gebracht, die chemisch in der Lage ist, eine Aggregation der Kolloidpartikel (4) hervorzurufen, und werden ganz oder teilweise in besagte zweite Lösung (2) eingetaucht, wobei die eingetauche Dicke der besagten Fasern den Eintauchbereich definiert,
- besagte derart vorüberzogene Fasern (1) werden mit ihrer selben seitlichen Oberfläche mit der Oberfläche der besagten ersten Lösung (3) von Kolloidpartikeln (4) in Kontakt gebracht und in sie bis höchstens bis zu besagtem Eintauchbereich eingetaucht, so dass lokal ein Kolloidgel (5) mit einer von der Konzentration der besagten ersten Lösung (3) bestimmten Dicke gebildet wird,
- die Trennung der besagten von der ersten Lösung (3) überzogenen Fasern (1) und
- das Trocknen und/oder Verdampfen des Lösungsmittels aus der ersten Lösung (3).

2. Verfahren nach Anspruch 1, **dadurch gekennzeichnet, dass** die vorbestimmte Konzentration an Kolloidpartikeln (4) zwischen Massenanteilen von 0,5 % und 50 % einschließlich dieser Werte liegt.

3. Verfahren nach den Ansprüchen 1 oder 2, **dadurch gekennzeichnet, dass** besagte zweite Lösung (2) unter folgenden gewählt : Salzlösungen, mit Micellen oder nicht absorbierenden Polymeren angereicherte Lösungen zur Induktion des Abbaus in Wechselwirkung durch Anziehung und/oder Lösungen, deren pH-Bedingungen die Kolloidpartikel destabilisieren.

4. Verfahren nach Anspruch 3, **dadurch gekennzeichnet, dass** die Salzlösungen Aluminiumchloridlösungen sind.

5. Verfahren nach einem der Ansprüche 1 bis 4, **dadurch gekennzeichnet, dass** besagte Kolloidpartikel (4) unter Polymerpartikeln, Metallpartikeln, halbleitenden Partikeln, Emulsionstropfen und/oder anorganischen Partikeln gewählt werden.

6. Verfahren nach Anspruch 5, **dadurch gekennzeichnet, dass** die Polymerpartikel aus Polystyrenlatex bestehen.

7. Verfahren nach Anspruch 5, **dadurch gekennzeichnet, dass** die anorganischen Partikel unter Kieselerde, Titanoxid und/oder Lehm gewählt werden.

8. Verfahren nach einem der Ansprüche 1 bis 7, **dadurch gekennzeichnet, dass** das Eintauchen in besagte zweite Lösung(2) komplett ist.

9. Verfahren nach einem der Ansprüche 1 bis 7, **dadurch gekennzeichnet, dass** das Eintauchen in besagte zweite Lösung(2) partiell ist.

10. Konzentrische Fasern, die mit dem Verfahren nach Anspruch 8 erhalten werden.

11. Asymmetrische Fasern, die mit dem Verfahren nach Anspruch 9 erhalten werden.

12. Verwendung von Fasern nach Anspruch 10 zur Fertigung von Elektroden und/oder Sensoren.

13. Verwendung von Fasern nach Anspruch 11 zur Fertigung von mechanischen Stellvorrichtungen.
